# EUROPÄISCHE PATENTSCHRIFT

(11) **EP 0 735 316 B1**
(45) Veröffentlichungstag und Bekanntmachung des Hinweises auf die Patenterteilung: **17.07.2002**
(21) Anmeldenummer: 96103730.6
(22) Anmeldetag: 09.03.1996
(51) Int. Cl.: F21V 29/00, F21V 8/00, G02B 6/42, G02B 6/38

(54) **Vorrichtung zum Einspeisen von Licht in Lichtleiter**
Device for supplying light in light guide
Dispositif pour alimenter guide de lumière avec lumière

(30) Priorität: 01.04.1995 DE 19512350
(43) Veröffentlichungstag der Anmeldung: 02.10.1996
(73) Patentinhaber: FASEROPTIK HENNING GmbH, D-90584 Allersberg (DE)
(72) Erfinder:
(74) Vertreter: Matschkur, Lindner Blaumeier Patent- und Rechtsanwälte

(56) Entgegenhaltungen:
- EP-A- 0 401 711
- FR-A- 2 118 317
- US-A- 4 730 885
- US-A- 5 099 399
- PATENT ABSTRACTS OF JAPAN vol. 7, no. 60 (P-182) [1205] , 12.März 1983 & JP-A-57 207207 (FUJI SHASHIN KOKI), 18.Dezember 1982,

## Beschreibung

Bei Lichtleitersystemen aller Art, beispielsweise bei Verkehrswechselzeichen mit faseroptischer Lichteinspeisung, aber auch bei Beobachtungs- und Bearbeitungssystemen mit Lichtleitern im medizinischen Bereich, sowie auch bei Raumbeleuchtungen, die nicht lediglich Dekorationsleuchten darstellen, sondern mit entsprechend hohen Lichtleistungen arbeiten, ergibt sich das Problem der thermischen Belastung durch den Wärmestrahlungsanteil der Lichtstrahlung, die zur Vermeidung körperlicher Beeinträchtigung des Patienten im einen Fall, sowie zur Vermeidung von Schäden und Störungen durch zu große Erwärmung der Anlagen möglichst vollständig und schonend abgeführt werden sollte. Hierzu ist in vielen Fällen im Gerät mit der oder den Lichtquellen mit einem nachgeschalteten Absorptionsstab ein Ventilator vorgesehen, der für eine ausreichende Wärmeabfuhr sorgen soll. Ein solcher Ventilator kann jedoch in vielen Fällen aus Platzmangel nicht eingesetzt werden, arbeitet häufig auch nur mit einer ungenügenden Leistung und schließlich besteht gerade bei an Außenstellen, wie Verkehrswechselzeichen an Autobahnen, eingesetzten Lichtleitersystem die Gefahr eines Ausfalls des Ventilators, der auch dann mit einem möglichen nachfolgenden Ausfall des ganzen Systems verbunden ist.

Bei einer Hochleistungs-Weißlichtübertragung, wie man sie zur Beleuchtung von Räumen anstrebt, ergibt sich darüber hinaus die Problematik, daß hierfür gerade Kunststofflichtleiter besonders gut geeignet sind wegen ihrer besseren Übertragungseigenschaften, diese Kunststofflichtleiter aber gegenüber Quarzlichtleitern sehr viel temperaturempfindlicher sind, so daß das Problem der Wärmeabfuhr sich hier besonders stellt.

Ein mit einem Kühler versehener Lichtleiter ist aus dem Dokument US-A-4,730,885 bekannt.

Der Erfindung liegt daher die Aufgabe zugrunde, eine Vorrichtung zum Einspeisen von Licht in Lichtleiter zu schaffen, die eine einfache sichere Abfuhr der entstehenden Wärme gewährleistet und dabei auch gleichzeitig sicherstellt, daß die erst durch Absorption im Lichtleiter selbst entstehende Wärme rechtzeitig abgeleitet wird, so daß auch in Kunststofflichtleiter extrem hohe Lichtleistungen eingespeist werden können.

Zur Lösung dieser Aufgabe ist erfindungsgemäß vorgesehen, daß im Strahlengang zwischen Lichtquelle und Lichtleiter ein, zumindest den Eingangsabschnitt des Lichtleiters mit umschließender, Kühler mit einer das vorzugsweise flüssige Kühlmittel auch längs des Eingangsabschnitts des Lichtleiters bewegenden Umwälzpumpe vorgesehen ist.

Durch die erfindungsgemäße Flüssigkeitskühlung soll dabei nicht nur erreicht werden, daß ein zwischen Lichtleiter und Lichtquelle üblicherweise vorgesehener Absorptionsstab gekühlt wird, um den von diesem aus dem Licht herausgefilterten Wärmestrahlenanteil zu beseitigen. Die erfindungsgemäße Anordnung berücksichtigt gezielt auch das Problem der erst durch die spezielle Eigenabsorption im Lichtleiter aus dem zu übertragenden Lichtband herausgefilterten und in Wärme umgewandelten Strahlung. Bei allen Hochleistungslichtübertragungen mittels Lichtleitern, wie sie in jüngster Zeit zunehmend angestrebt werden, läßt sich nämlich, wie der vorliegenden Erfindung vorausgehende umfangreiche Versuche gezeigt haben, nur mit einer solchen direkten Kühlung zumindest des Eingangsabschnitts des Lichtleiters selbst ein befriedigendes Ergebnis erzielen.

In weiterer Ausgestaltung der Erfindung ist bei einem ersten Ausführungsbeispiel weiter vorgesehen, daß der Lichtleiter ein Multifaserlichtleiter ist, dessen Einzelfasern hinter der Lichteintrittsfläche, in der die Einzelfasern dicht gepackt sind, in Abstand voneinander angeordnet sind, um eine Flüssigkeitsströmung auch quer zur Lichtleiterachse zu ermöglichen. Bevorzugt erreicht man diese Anordnung dadurch, daß man die Lichtleiterfasern durch eine Lochscheibe fädelt, wodurch sie im Bereich dieser Lochscheibe auf Abstand gehaltert sind, während das vordere Lichtleiterende im Bereich der Lichteintrittsfläche von außen unter Spannung zusammengedrückt wird, so daß hier eine dichte Packung vorliegt.

Durch diese besondere teils dichte Packung, teils Auffächerung der Einzelfasern eines Multifaserlichtleiters erreicht man, daß im dicht gepackten Bereich lediglich Längskanäle zwischen den runden Leitern zum Durchströmen der Flüssigkeit längs der Einzelfasern vorgesehen sind, während durch die Auffädelung erreicht wird, daß in Abstand von der Lichteintrittsfläche dann eine Möglichkeit besteht, die Kühlflüssigkeit zur Seite hin abzuziehen bzw. von der Seite einzuspeisen, um sie nach vorne zur Lichteintrittsfläche durch die Kanäle zu drücken.

Dabei hat es sich als besonders zweckmäßig erwiesen, daß der Eingangsabschnitt des Multifaserlichtleiters in einem Kühlerrücklaufrohr angeordnet ist, das das Stirnende des Lichtleiters dichtend umfaßt, wobei in Abstand hinter der auch den Kühlmittel-Eintritt bildenden Lichteintrittsstirnfläche des Lichtleiters seitliche Kühlmittelaustrittsöffnungen im Lichtleitermantel angeordnet sind.

Im einfachsten Fall kann bei einer derartigen Anordnung der Kühler zwei konzentrische, Flüssigkeitszuführ- bzw. -abführstutzen zum Anschluß an die Umwälzpumpe aufweisende, den Lichtleitereingangsabschnitt konzentrisch umfassende und vorzugsweise gegenläufig durchströmte Kühlmittelzuführungsrohre enthalten.

Es versteht sich von selbst, daß auch bei einer derartigen Anordnung mit speziell gekühltem Eingangsabschnitt des Lichtleiters koaxial vor dem Lichtleiter in an sich bekannter Weise wiederum ein zur Vorabsorption von Wärmestrahlung dienender, zumindest ebenfalls teilweise im Kühler angeordneter und vom Kühlmittel umströmter Glas- oder Kunststoffstab als Absorptionsstab angeordnet sein kann. Darüber hinaus kann erfindungsgemäß natürlich auch vorgesehen sein, daß der beschriebene Kühlkreislauf entweder mit einem externen Rippenkühler zur Wärmeabfuhr an die Umgebung versehen ist - nachdem die eigentliche Kühlstrecke am Lichtleiter ja ein sehr kleines Bauteil ist, das demzufolge auch nur eine geringe Oberfläche haben kann, selbst wenn es mit Rippen versehen wäre - oder daß der erfindungsgemäße Kühler den Primärkreislauf eines als Wärmetauscher ausgebildeten Kühlers mit einem sekundären Kühlerteil mit Rippen zur Abgabe der Wärme an die Umgebung bilden kann.

Gemäß einem weiteren Ausführungsbeispiel der Erfindung kann auch vorgesehen sein, daß der Kühler nicht nur den Anfangsabschnitt des Lichtleiters umschließt und direkt kühlt, sondern auch die Lichtquelle mit umschließt, wobei die Innenwand des Kühlegehäuses als Fokussierungsspiegel ausgebildet ist, um das Licht der Lichtquelle auf die Eingangsstirnfläche des Lichtleiters abzubilden. Bei einer zumindest angenähert punktförmigen Ausbildung der Lichtquelle kann dabei zweckmäßigerweise vorgesehen sein, daß die Lichtquelle im Mittelpunkt eines Halbkugelspiegels angeordnet ist, an den sich ein abgeschnittener sphärischer elliptischer Spiegel stufenlos anschließt, dessen einer Brennpunkt mit dem Mittelpunkt des Halbkugelspiegels zusammenfällt, daß dem Strahlungskegel zum freien Rand des elliptischen Spiegels eine Sammellinse eingeschrieben ist, die den ersten Brennpunkt auf den zweiten Brennpunkt abbildet, und daß an den freien Rand des elliptischen Spiegels eine den mit der Eingangsstirnfläche des Lichtleiters zusammenfallenden zweiten Brennpunkt umgreifende Gehäuseschale anschließt, so daß die Reflektoreinrichtung mit der zusätzlichen Gehäuseschale ein geschlossenes Gehäuse bildet, in welchem die Kühlflüssigkeit zirkulierenkann.

Bei einer linienförmigen Lichtquelle, beispielsweise einer Kurzbogenlampe od.dgl., kann gemäß einem weiteren Merkmal der vorliegenden Erfindung vorgesehen sein, daß die Lichtquelle in einer Brennlinie eines Zylinderspiegels mit elliptischer Grundfläche angeordnet ist, in dessen anderer Brennlinie die spaltförmige Eintrittsfläche des Lichtleiters angeordnet ist, wobei bei einem üblichen Multifaserlichtleiter mit mehreren Einzelfasern bevorzugt ein Querschnittswandler, z.B. eine Quarzscheibe, dem eigentlichen Lichtleiter vorgeschaltet ist, um die Abbildung der linienförmigen Lichtquelle in eine schmale Eingangsstirnfläche des Querschnittswandlers vorzunehmen, der dann auch gleichzeitig noch einen Absorptionsstab bildet, um bereits vor dem Eintritt des Lichts in den eigentlichen Lichtleiter, vorzugsweise einen Kunststoff-Multifaserlichtleiter, große Teile der Wärmestrahlung herauszufiltern und durch die umströmende Kühlflüssigkeit abzuführen. Nach wie vor ist es aber auch in diesem Fall wiederum angestrebt, daß der Eingangsabschnitt des eigentlichen Lichtleiters noch mit im kühlmitteldurchströmten Kühlergehäuse angeordnet ist, so daß die Fasern im Eingangsbereich direkt einzeln gekühlt werden.

Weitere Vorteile, Merkmale und Einzelheiten der Erfindung ergeben sich aus der nachfolgenden Beschreibung zweier Ausführungsbeispiele sowie anhand der Zeichnung. Dabei zeigen:
- Fig. 1: einen Schnitt durch eine erfindungsgemäße Lichteinspeisvorrichtung in einen Multifaserlichtleiter mit vorgeschaltetem Absorptionsstab,
- Fig. 2: eine schematische teilweise aufgebrochene perspektivische Ansicht einer Anordnung zur Einspeisung von Licht einer Kurzbogenlampe in einen Lichtleiter mit spaltförmiger Lichteintrittsfläche,
- Fig. 3: einen horizontalen Schnitt längs der Linie III-III in Fig. 2, und
- Fig. 4: einen Schnitt durch eine Lichteinspeisvorrichtung mit einer punktförmigen Lichtquelle, bei der das die Lichtquelle und die Lichteintrittsfläche des Lichtleiters umgebende kühlmitteldurchströmte Gehäuse ebenfalls wie bei den Figuren 2 und 3 als der Lichtbündelung dienende Reflexionsfläche ausgebildet ist.

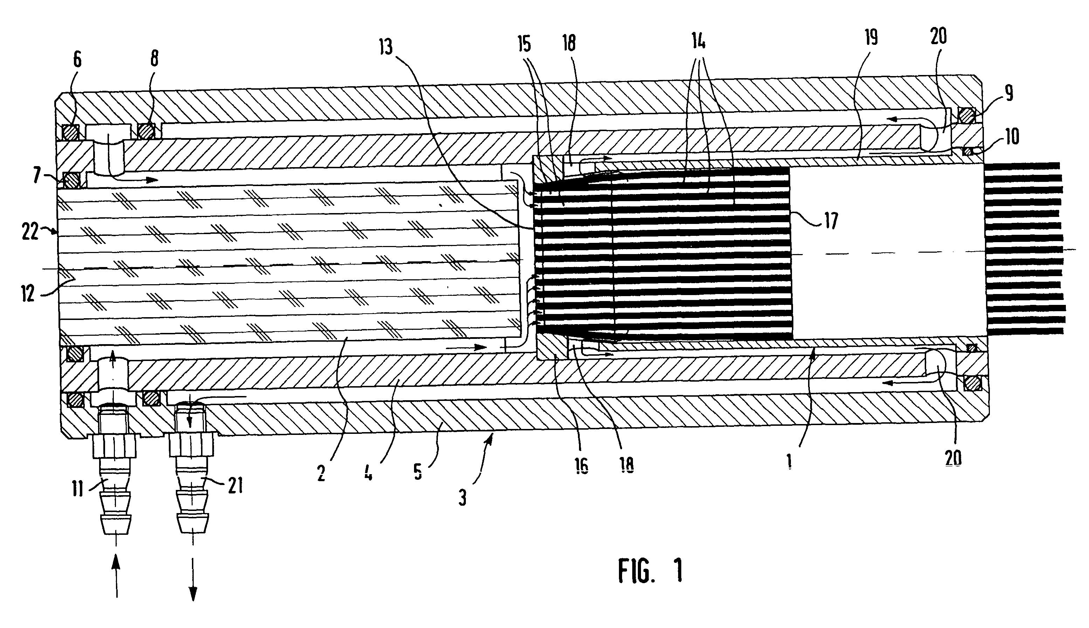

Bei der Anordnung nach Fig. 1 ist ein Multifaserlichtleiter 1 mit einem in Abstand vorgeschalteten konzentrisch zum Lichtleiter angeordneten Absorptionsstab 2 in einem von einem Kühlmittel durchströmten Kühler 3 angeordnet, der aus zwei konzentrisch ineinander angeordneten Rohren 4 und 5 mit dazwischengesetzten Dichtringen 6 bis 10 gebildet ist. Durch einen Kühlmittelzuführstopfen 11 wird das Kühlmittel ringförmig um den Eingangsbereich 12 des Absorptionsstabs 2 eingeleitet und an dessen Längsseite im Rohr 4 geführt, so daß es an der Lichteintrittsstirnfläche 13 des Lichtleiters 1 zwischen die Einzelfasern 14 in die zwischen diesen freibleibenden Kanäle 15 eintreten kann. Zu diesem Zweck ist das vordere Ende des Lichtleiters 1 durch einen Spannring 16 zusammengedrückt, so daß in diesen Bereich lediglich Längskanäle zwischen den Einzelfasern 14 bestehen. Umgekehrt ist hinter dieser Eintrittsstirnfläche 13 die Anordnung so getroffen, daß die Einzelfasern 14 auseinandergefächert sind, was vorteilhafterweise dadurch erzielt wird, daß die Einzelfasern durch eine etwa im Bereich der Fläche 17 angeordnete Lochplatte gefädelt sind. Durch dieses Auffächern ergibt sich ein allseitiger Abstand zwischen den Einzelfasern 14, was zur Folge hat, daß das zunächst in axialer Richtung durch die Kanäle im Bereich der Eintrittsstirnfläche 13 einströmende Kühlmittel im aufgefächerten Bereich vor der Ebene 17, in der die Lochscheibe angeordnet ist und in der dann ja die Abdichtung der Kanäle gegeben ist, radial zur Seite ausströmen kann, so daß das Kühlmittel durch seitliche Kühlmittelaustrittsöffnungen 18 im Lichtleitermantel 19 austreten kann, um zwischen dem Lichtleitermantel 19 und dem Innern des Rohrs 4 zum Ende der Kühleranordnung zu gelangen, wo es über Austrittsöffnungen 20 in den Raum zwischen den beiden Rohren 4 und 5 gelangt, um in umgekehrter Richtung zurückgeleitet zu werden, so daß es durch den Kühlmittelaustrittsstutzen 21 wieder aus dem Kühler austreten kann. An die Stützen 11 und 21 ist eine im einzelnen nicht gezeigte Pumpe angeschlossen, wobei - wie bereits weiter oben ausgeführt - in diesem Kreislauf entweder ein Konvektionskühler zur Abführung der Wärme des Kühlmittels an die Umgebung direkt vorgesehen sein kann, oder aber auch der Kühlkreislauf des dargestellten Kühlers nur den Primärkreislauf eines Wärmetauschers bilden kann.

Durch die erfindungsgemäße Anordnung erfolgt nicht nur eine wirksame Kühlung des Absorptionsstabs, der eine Vorabsorption von Wärmestrahlung aus dem über die Stirnfläche 22 von einer nicht gezeigten Lichtquelle eingestrahlte Licht bildet, sondern insbesondere auch eine wirksame Kühlung der Fasern im Eingangsbereich, in dem sie entsprechend den optischen Eigenschaften des Kunstoff- oder Glasmaterials der Einzelfasern im besonderen Maß charakteristische Strahlungsbereiche des eingestrahlten Lichts absorbieren, so daß gerade diese Eingangsbereiche sich besonders stark erwärmen würden, wenn man mit hohen Leistungen arbeitet.

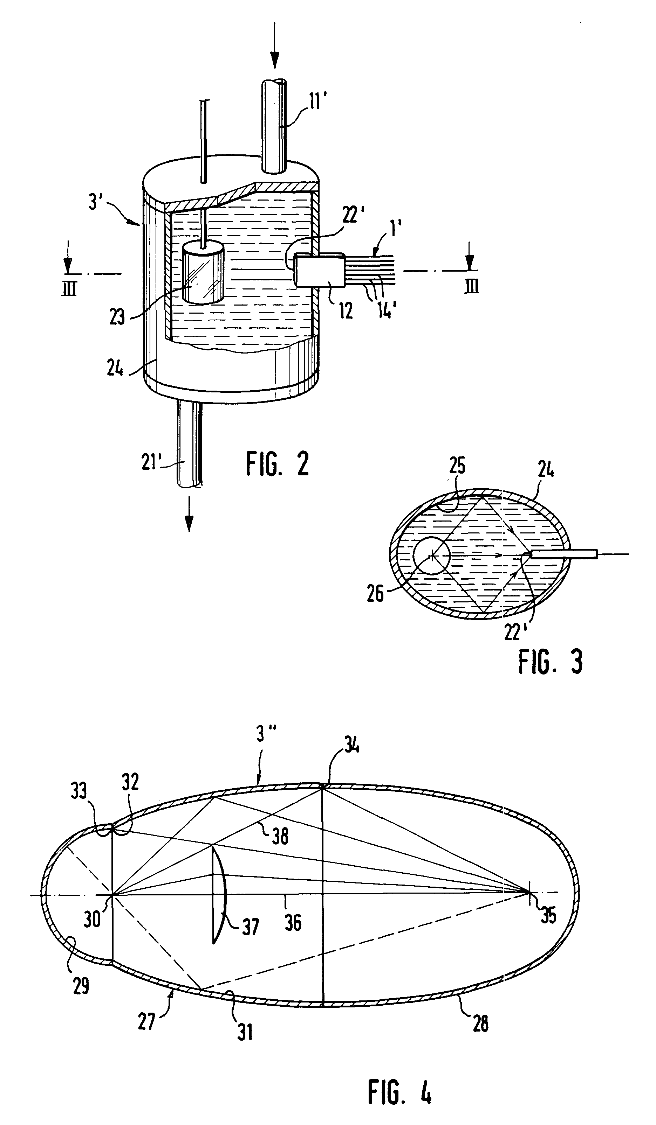

Die Figuren 2 und 3 zeigen eine schematische Ausführungsform zum Einspeisen von Licht einer Kurzbogenlampe 23 in einen Lichtleiter 1'. Zu diesem Zweck ist nicht nur die Eintrittsfläche des Lichtleiters, im dargestellten Ausführungsbeispiel die Eintrittsfläche 22' eines vorgeschalteten als Querschnittswandler dienenden Absorptionsstabs 12, an dem die Einzelfasern 14' rückseitig befestigt sind, im Innern eines Kühlers 3' angeordnet, sondern auch die Lichtquelle 23 selbst. Das Gehäuse 24 des Kühlers ist dabei als Zylinder mit elliptischer Grundfläche ausgebildet, wobei der Lichtbogen der Kurzbogenlampe 23 in der einen Brennlinie und die Lichteintrittsfläche 22' in der anderen Brennlinie angeordnet sind. Kühlmittelzuführstutzen 11' und Kühlmittelabführstutzen 21' dienen wiederum dazu, eine Zirkulation von Kühlmittel im Kühler 3' zu bewirken.

Durch die verspiegelte Ausbildung der Innenfläche 25 des Gehäuses 24 ergibt sich, wie man in Fig. 3 schematisch erkennen kann, eine wirksame Bündelung des linienförmigen Lichts der Kurzbogenlampe von der Brennlinie 26 der zweiten Brennlinie in der Eintrittsebene 22'. Dabei kann, abweichend vom gezeigten Ausführungsbeispiel vervorzugt auch vorgesehen sein, daß nicht nur der Absorptionsstab 12 teilweise in den Kühler einragt, sondern daß auch der sich anschließende Eingangsabschnitt des Lichtleiters 1' noch mit im Kühler liegt, so daß - in ähnlicher Weise wie beim Ausführungsbeispiel nach Fig. 1, wenn auch mit möglicherweise geänderter Führung der Kühlflüssigkeit zwischen den Einzelfasern - eine wirksame Kühlung des Eingangsabschnitts des Lichtleiters 1' mit erfolgen kann. Bei der gezeigten parallelen Anordnung mehrerer Einzelfasern 14' nebeneinander genügt eine Außenumströmung des Lichtleiters 1'. Bei Ausbildung des Absorptionsstabs 12 derart, daß er von der linienförmigen Eintrittsfläche 22' in eine kreisrunde Austrittsfläche für einen mit entsprechend kreisrundem Querschnitt ausgebildeten Multifaserlichtleiter übergeht, wäre es wichtiger, eine aufgefächerte Anordnung zur Innenkühlung des Eingangsabschnitts des Lichtleiters entsprechend Fig. 1 vorzusehen.

Die Fig. 4 schließlich zeigt schematisch die Ausbildung eines Kühlers 3" für eine im wesentlichen punktförmige Lichtquelle, bei der wiederum das Kühlergehäuse als Reflektor zur Abbildung der Lichtquelle auf die Eingangsstirnfläche des Lichtleiters dient. Das Kühlergehäuse besteht dabei aus zwei rotationssymmetrischen Schalen 27 und 28, in denen das Kühlmittel durch nicht gezeigte Stutzen zu- und abgeführt wird, wobei die erstere Schale 27 als Fokussierüngseinrichtung ausgebildet ist, in der die als Lämpchen od.dgl. ausgebildete Lichtquelle ebensowenig dargestellt ist, wie die notwendigen Durchkühlungen für die elektrische Stromzuführung und die Halterung des Lämpchens, als auch die Aufhängestreben der weiter unten noch zu beschreibenden Sammellinse. Die Fokussierungseinrichtung besteht aus einem Halbkugelspiegel 29, in dessen Mittelpunkt 30 die Lichtquelle angeordnet ist. An diesen Halbkugelspiegel 29 schließt sich ein sphärischer elliptischer Spiegel 31 an, der auf der einen Seite in der durch seinen ersten Brennpunkt, der mit dem Mittelpunkt 30 zusammenfällt, verlaufenden Ebene abgeschnitten ist und sich stufenlos mit dem dadurch gebildeten abgeschnittenen Rand 32 an die Randkante 33 des Halbkugelspiegels anschließt. Der freie äußere Rand 34 des elliptischen Spiegels 31 liegt bevorzugt in der Mitte zwischen dem ersten Brennpunkt 30 und dem zweiten Brennpunkt 35, an welchem die Eintrittsstirnfläche des Lichtleiters liegt, in welchen das Licht der punktförmigen im Brennpunkt 30 liegenden Lichtquelle eingespeist werden soll.

Auf der optischen Achse 36 ist mit Hilfe von nicht gezeigten Aufhängestreben eine Sammellinse 37 angeordnet, die dem Strahlungskegel 38 von der Lichtquellemittelpunkt 30 des Halbkugelspiegels 29 zum freien Rand 34 eingeschrieben ist. Die Sammellinse ist so ausgebildet, daß sie Licht von der Lichtquelle im Punkt 30 auf den zweiten Brennpuntk 35 abbildet.

## Patentansprüche

1. Vorrichtung zum Einspeisen von Licht in Lichtleiter mit einem in den Strahlengang zwischen der Lichtquelle und den Lichtleiter eingeschalteten, zumindest den Eingangsabschnitt des Lichtleiters (1, 1') umschließenden Kühler (3, 3', 3") mit einer das vorzugsweise flüssige Kühlmittel längs des Eingangsabschnitts des Lichtleiters (1, 1') bewegenden Umwälzpumpe, **dadurch gekennzeichnet, dass** der Lichtleiter (1) ein Multifaserlichtleiter ist, dessen Einzelfasern (14) hinter der Lichtleitereintrittsfläche (13) mit dicht gepackten Einzelfasern in Abstand voneinander angeordnet sind, um eine Flüssigkeitsströmung auch quer zur Lichtleiterachse zu ermöglichen.

2. Vorrichtung nach Anspruch 1, **dadurch gekennzeichnet, dass** die Lichtleitereinzelfasern (14) durch eine Lochscheibe gefädelt sind.

3. Vorrichtung nach Anspruch 1 oder 2, **dadurch gekennzeichnet, dass** der Eingangsabschnitt des Multifaserlichtleiters (1) in einem Kühlerrücklaufrohr (4) angeordnet ist, das das Stirnende (13) des Lichtleiters (1) dichtend umfasst, wobei in Abstand hinter der, auch den Kühlmittel-Einlauf bildenden Lichteintritts-Stirnfläche (13) des Lichtleiters (1) seitliche Kühlmittelaustrittsöffnungen (18) im Lichtleitermantel (19) angeordnet sind.

4. Vorrichtung nach einem der Ansprüche 1 bis 3, **dadurch gekennzeichnet, dass** der Kühler (3) zwei konzentrische, Flüssigkeitszuführ- bzw. -abführstutzen (11, 21) zum Anschluss an die Umwälzpumpe aufweisende, den Lichtleitereingangsabschnitt konzentrisch umfassende, vorzugsweise gegenläufig durchströmte, Kühlmittelführungsrohre (4, 5) enthält.

5. Vorrichtung nach einem der Ansprüche 1 bis 4, **dadurch gekennzeichnet, dass** koaxial vor dem Lichtleiter (1) ein zur Vorabsorption von Wärmestrahlung dienender, zumindest teilweise im Kühler (3) angeordneter und vom Kühlmittel umströmter, Glas- oder Kunststoffstab (2) angeordnet ist.

6. Vorrichtung nach Anspruch 1, **dadurch gekennzeichnet, dass** der Kühler (3', 3") die Lichtquelle mit umschließt, wobei die Innenwand des Kühlergehäuses als Fokussierungsspiegel ausgebildet ist, um das Licht der Lichtquelle auf die Eingangsstirnfläche des Lichtleiters abzubilden.

7. Vorrichtung nach Anspruch 6, **dadurch gekennzeichnet, dass** eine zumindest annähernd punktförmige Lichtquelle im Mittelpunkt (30) eines Halbkugelspiegels (29) angeordnet ist, an den sich ein abgeschnittener sphärischer elliptischer Spiegel (31) stufenlos anschließt, dessen einer Brennpunkt mit dem Mittelpunkt (30) des Halbkugelspiegels (29) zusammenfällt, dass dem Strahlungskegel (38) zum freien Rand des elliptischen Spiegels eine Sammellinse (37) eingeschrieben ist, die den ersten Brennpunkt (30) auf den zweiten Brennpunkt (35) abbildet, und dass an den freien Rand des elliptischen Spiegels (31) eine den mit der Eingangsstirnfläche des Lichtleiters zusammenfallenden zweiten Brennpunkt umgreifende Gehäuseschale (28) anschließt, so dass die Reflektoreinrichtung (27) mit der zusätzlichen Gehäuseschale (28) ein geschlossenes Gehäuse bildet, in welchem die Kühlflüssigkeit zirkulieren kann.

8. Vorrichtung nach Anspruch 6, **dadurch gekennzeichnet, dass** die Lichtquelle eine Kurzbogenlampe (23), die in der einen Brennlinie (26) eines Zylinderspiegels (25) mit elliptischer Grundfläche angeordnet ist, in dessen anderer Brennlinie die spaltförmige Eintrittsfläche (22') des Lichtleiters angeordnet ist.

9. Vorrichtung nach Anspruch 8, **dadurch gekennzeichnet, dass** dem mehrere Einzelfasern (14') enthaltenden Lichtleiter (1') ein Querschnittswandler, z.B. eine Quarzscheibe (12), vorgeschaltet ist.

## Claims

1. Device for supplying light into light guides, having a cooler (3, 3', 3") which is connected into the ray path between the light source and the light guide, encloses at least the input section of the light guide (1, 1'), and has a circulating pump moving the preferably liquid coolant along the input section of the light guide (1, 1'), **characterised in that** the light guide (1) is a multi-fibre light guide, whose individual fibres (14) are disposed spaced apart behind the light guide inlet face (13) with densely packed individual fibres in order to permit the flow of liquid even transverse to the light guide axis.

2. Device according to claim 1, **characterised in that** the light guide individual fibres (14) are threaded through a perforated disc.

3. Device according to claim 1 or 2, **characterised in that** the input section of the multi-fibre light guide (1) is disposed in a coolant return pipe (4), which encompasses the front end (13) of the light guide (1) in a sealing-tight manner, lateral coolant discharge apertures (18) being disposed in the light guide casing (19) at a distance behind the light inlet end face (13) of the light guide (1) also forming the coolant inlet.

4. Device according to one of claims 1 to 3, **characterised in that** the cooler (3) contains two concentric liquid supply and discharge nozzles (11, 21) for connecting to coolant conducting pipes (4, 5), which are preferably traversed in counterflow, concentrically encompass the light guide input section, and comprise the circulating pump.

5. Device according to one of claims 1 to 4, **characterised in that** coaxially upstream of the light guide (1) is disposed a glass or plastics rod (2) for the pre-absorption of heat radiation, which is disposed at least partly in the cooler (3) and about which the coolant flows.

6. Device according to claim 1, **characterised in that** the cooler (3', 3") encloses the light source as well, the inner wall of the cooler housing being formed as a focussing mirror in order to image the light of the light source on the input end face of the light guide.

7. Device according to claim 6, **characterised in that** a light source which is at least approximately punctual is disposed at the centre point (30) of a hemispherical mirror (29), to which a truncated spherical, elliptical mirror (31) is joined continuously, whose one focal point coincides with the centre point (30) of the hemispherical mirror (29), **in that** a convex lens (37) is inscribed to the cone of radiation (38) at the free edge of the elliptical mirror and images the first focal point (30) on the second focal point (35), and **in that** a housing shell (28)encompassing the second focal point coinciding with the input end face of the light guide adjoins the free edge of the elliptical mirror (31), so that the reflector (27) forms with the additional housing shell (28) a closed housing in which the cooling liquid can circulate.

8. Device according to claim 6, **characterised in that** the light source [is] a short arc lamp (23), which is disposed in the one focal line (26) of a cylindrical mirror (25) with an elliptical base face, in whose other focal line the slot-like inlet face (22') of the light guide is disposed.

9. Device according to claim 8, **characterised in that** a cross-section transformer, e.g. a quartz disc (12), is connected upstream of the light guide (1') which comprises a plurality of individual fibres (14').

## Revendications

1. Dispositif pour introduire de la lumière dans des guides optiques, comportant un refroidisseur (3, 3', 3") inséré dans le trajet des rayons, entre la source de lumière et le guide optique, et enveloppant au moins le tronçon d'entrée du guide optique (1, 1'), refroidisseur qui comprend une pompe de circulation déplaçant l'agent de refroidissement, de préférence liquide, le long du tronçon d'entrée du guide optique (1, 1'), **caractérisé en ce que** le guide optique (1) est un guide optique multifibre, dont les fibres individuelles (14), en aval de la surface de pénétration (13) du guide optique où les fibres individuelles sont serrées de façon jointive, sont placées, à distance les unes des autres pour permettre un écoulement du liquide également dans une direction transversale à l'axe du guide optique.

2. Dispositif selon la revendication 1, **caractérisé en ce que** les fibres individuelles (14) du guide optique sont enfilées a travers une plaquette à trous.

3. Dispositif selon la revendication 1 ou 2, **caractérisé en ce que** le tronçon d'entrée du guide optique multifibre (1) est disposé dans un tube de retour (4) du refroidisseur, qui enserre de façon étanche l'extrémité frontale (13) du guide optique (1), tandis qu'à une certaine distance en aval de la surface frontale de pénétration de lumière (13) du guide optique (1), qui constitue également l'entrée pour l'agent de refroidissement, sont disposés des orifices latéraux (18) de sortie de l'agent de refroidissement, pratiqués dans la gaine (19) du guide optique.

4. Dispositif selon l'une des revendications 1 à 3, **caractérisé en ce que** le refroidisseur (3) renferme deux tubes concentriques (4, 5) de conduction de l'agent de refroidissement, qui présentent des embouts respectifs d'arrivée et de départ de liquide (11, 21) destinés à être raccordés à la pompe de circulation, enserrent concentriquement le tronçon d'entrée du guide optique et sont, de préférence, traversés par des courants de sens opposés.

5. Dispositif selon l'une des revendications 1 à 4, **caractérisé en ce qu'**en amont du guide optique (1), est disposé, coaxialement à celui-ci, un barreau de verre ou de matière plastique (2) servant à assurer une pré-absorption du rayonnement calorifique, disposé au moins partiellement dans le refroidisseur (3) et enveloppé par le courant d'agent de refroidissement.

6. Dispositif selon la revendication 1, **caractérisé en ce que** le refroidisseur (3', 3") enveloppe conjointement la source de lumière, la paroi intérieure de l'enveloppe du refroidisseur étant alors aménagée en un miroir de focalisation pour projeter la lumière de la source de lumière sur la surface frontale d'entrée du guide optique.

7. Dispositif selon la revendication 6, **caractérisé en ce qu'**une source de lumière ponctuelle, au moins approximativement, est disposée à l'emplacement du centre (30) d'un miroir hémisphérique (29) auquel se rattache, sans discontinuité, un miroir de forme elliptique sphérique tronquée (31), dont un foyer est confondu avec le centre (30) du miroir hémisphérique (29), **en ce que** dans le cône de rayonnement (38) vers le bord libre du miroir de forme elliptique, est inscrite une lentille convergente (37), qui projette l'image du premier foyer (30) sur le second foyer (35), et **en ce qu'**au bord libre du miroir de forme elliptique (31), est joint une coque d'enveloppe (28) embrassant le second foyer coïncident avec la surface frontale d'entrée du guide d'onde, afin que l'ensemble réflecteur (27) forme avec la coque d'enveloppe additionnelle (28), une enveloppe fermée, dans laquelle le liquide de refroidissement peut circuler.

8. Dispositif selon la revendication 6, **caractérisé en ce que** la source de lumière est une lampe à arc court (23), qui est disposée sur l'un (26) des axes focaux d'un miroir cylindrique (25) à surface de base elliptique, sur l'autre axe focal duquel est disposée la surface de pénétration (22'), en forme de fente, du guide optique.

9. Dispositif selon la revendication 8, **caractérisé en ce qu'**en amont du guide optique (1') renfermant plusieurs fibres individuelles (14') est monté un changeur de section transversale, par exemple une plaquette de quartz (12).
